# EUROPÄISCHE PATENTSCHRIFT

(11) **EP 0 314 878 B1**
(45) Veröffentlichungstag und Bekanntmachung des Hinweises auf die Patenterteilung: **26.05.1993**
(21) Anmeldenummer: 88111304.7
(22) Anmeldetag: 14.07.1988
(51) Int. Cl.: F02M 25/06

(54) **Verfahren zur Justierung der Federlänge eines Abgasrückführventils für eine Brennkraftmaschine**
Method for adjusting the loaded length of the spring of an exhaust gas recirculation valve for an internal combustion engine
Méthode pour ajuster la longueur du ressort en état comprimé de la soupape de recirculation de gaz d'échappement pour un moteur à combustion interne

(30) Priorität: 31.10.1987 DE 8714506 U
(43) Veröffentlichungstag der Anmeldung: 10.05.1989
(73) Patentinhaber: PIERBURG GMBH, 41460 Neuss (DE)
(72) Erfinder: Sari, Osman, D-4048 Grevenbroich 5 (DE); Krämer, Michael, D-4000 Düsseldorf (DE)

(56) Entgegenhaltungen:
- EP-A- 0 019 854
- DE-A- 2 630 377
- DE-U- 8 714 505
- GB-A- 2 173 883
- US-A- 4 198 030

## Beschreibung

Die Erfindung betrifft ein Verfahren zur Justierung der Federlänge eines Abgasrückführventils für eine Brennkraftmaschine nach dem Oberbegriff des Anspruchs.

Derartige Abgasrückführventile werden für in Kraftfahrzeuge eingesetzte Dieselmotoren zur Abgasentgiftung benötigt und ihre Funktion ist hinreichend beschrieben worden, beispielsweise in der DE-OS 35 11 638, in der darüber hinaus Abgasrückführventile in vielen Varianten dargestellt sind.

Abgasrückführventile werden in sehr großen Stückzahlen gefertigt (Massenartikel), so daß ein erhöhtes Bedürfnis nach fortschrittlichen Lösungen für eine wirtschaftliche Fertigung besteht. Die in der DE-OS 35 11 638 angeregte Ausführung scheint in bezug auf die Justierung der Federeinspannlänge diesem Anspruch nicht zu entsprechen, da sie aus einer Vielzahl von Einzelteilen zusammengesetzt ist. Sie besteht aus einem im Deckel angeordneten Federteller, der mittels einer Schraube und Mutter in bekannter Weise einstellbar ist.

Aus der US-A-4 198 030 ist eine andere Federlängen-Justierung bekannt, bei der ein Federteller mit zylindrischem Ansatz in einer zylindrischen Deckelöffnung gehalten ist und bei der Justierung axial verschoben wird mit nachträglicher Sicherung durch Eindrücken von Einpreßnasen.

Einen anderen Weg gibt die DE-A-2 630 377 an, nach dieser ist es bei deren Abgasrückführventil erforderlich, die Teile oberes Gehäuse und Spiralfeder mit hoher Genauigkeit herzustellen, damit das Abgasrückführventil bei einem vorbestimmten konstanten Unterdruckwert öffnet.

Es ist bekannt, daß aus Gründen wirtschaftlicher Fertigung die zulässigen Abweichungen der Einspannkräfte einer Druckfeder möglichst groß zu wählen sind (DIN 2809, Berechnung und Konstruktion von Druckfedern). Selbst bei genauester Einhaltung mechanischer Maße ergeben sich bei dieser Lösung in bezug auf die Einspannkräfte erhebliche Exemplarstreuungen.

Der Erfindung liegt daher die Aufgabe zugrunde, ein Verfahren zur Justierung der Federlänge eines Abgasrückführventils für eine Brennkraftmaschine der angegebenen Art aufzufinden, so daß eine technisch leicht durchzuführende Justierung der Federeinspannlänge und eine wirtschaftliche Fertigung erreichbar sind, wobei darüber hinaus auch erhöhte Zuverlässigkeit und geringere Bauteile des Abgasrückführventils erreichbar sein sollen.
Diese Aufgabe ist mit den kennzeichnenden Merkmalen des Anspruchs gelöst.

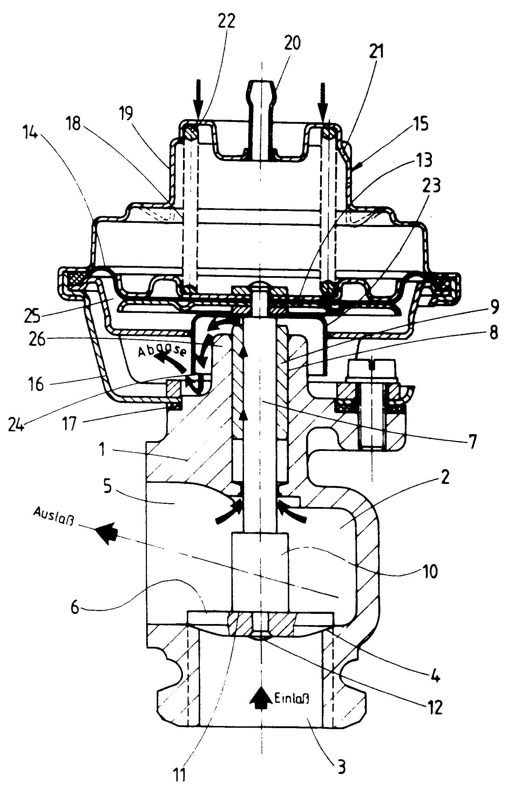

Erzielbare Vorteile werden in der nachfolgenden Beschreibung eines in der Zeichnung dargestellten Ausführungsbeispiels angegeben, das nach dem Verfahren justiert ist.

Die Zeichnung zeigt ein Abgasrückführventil für eine Brennkraftmaschine, gebildet aus einem gegossenen Gehäuse 1, das für den Anbau an den Motor ausgebildet ist und einen Abgaskanal 2 mit einem Einlaßbereich 3, einen Ventilsitzbereich 4 und einem Auslaßbereich 5 aufweist.

Der Ventilsitz 4 wirkt mit einem Ventilteller 6 zusammen, dessen Stößelabschnitt 7 teilweise aus dem Gehäuse 1 herausragt und in einer in eine Gehäuseöffnung 8 eingepreßten Buchse 9 geführt ist.

Der Stößel 7 weist im Auslaßbereich 5 einen gegenüber dem in der Buchse 9 geführten Abschnitt einen einen größeren Durchmesser aufweisenden Bund 10 auf, gegen dessen Axialfläche 11 der als Einzelteil durch Nietung eines aus der Axialfläche 11 herausragenden Zapfens 12 mit dem Stößel 7 verbundene Ventilteller 6 gedrückt wird.

Der aus dem Gehäuse 1 herausragende Stößel 7 ist mittels zweier Membranteller 13 mit einer Membrane 14 einer Membrandose 15 verbunden, die mittels eines mit der Membrandose 15 verbundenen Form-Blechstückes 16 an das Gehäuse 1 geschraubt und durch einen Gehäuseansatz 17 zur Gehäuseöffnung 8 zentriert ist.

Ein eine evakuierbare Kammer 18 der Membrandose 15 begrenzender Deckel 19 weist einen Druckanschluß 20 und einen Domansatz 21 auf, der mit einem zwischen einem zylindrischen Absatz und dem Domansatz 21 bestehenden Zwischenteil des Deckels 19 verbunden ist. Der Domansatz 21 nimmt eine die Membrane 14 und den Ventilteller 6 in Richtung des Ventilsitzes 4 belastende Feder 22 auf, wobei der Domansatz 21 durch axialen Belastung in Richtung auf den membranseitigen Absatz hin gedrückt wird, dadurch das Zwischenteil in diese Richtung verformt, die Gesamthöhe des Deckels 19 verkleinert und die erforderliche Federeinspannlänge einjustiert wird.

Der aus dem Gehäuse 1 bzw. der Buchse 9 herausragende Stößel 7 weist einen mit der Membrane 14 aufgenieteten Topf 23 auf, der mit seinem offenen Ende 24 aus einer atmosphärisch belüfteten Kammer 25 der Membrandose 15 ragt und über einen die Gehäuseöffnung 8 bzw. Buchse 9 einfassenden Gehäuseansatz gestülpt ist.

Bei der Montage wird die Buchse 9 in die Gehäuseöffnung gepreßt, in diese Buchse der Stößel vom Einlaßbereich her eingesteckt und mit dem Topf und der Membrane sowie am unteren Ende mit dem Ventilteller vernietet oder verschweißt, wobei der Ventilteller durch den Auslaßbereich eingelegt wird.
Alternativ ist jedoch auch möglich, den Ventilsitz durch eine eingepreßte Buchse zu bilden (gestrichelt dargestellt), die ggf. durch Stifte gesichert ist, so daß der Ventilteller durch den Einlaßbereich eingelegt werden kann, ggf. mit bereits angenietetem Stößel.

Zur Justierung eines Arbeitsdruckes in der evakuierbaren Kammer 18, bei dem das Ventil öffnen soll, wird die Einspannlänge der Feder 22 durch Hineindrücken des Domansatzes 21 in den Deckel 19 unter bleibender Verformung des Zwischenteils des Deckels eingestellt, wodurch übliche Einstellschrauben, Haltebleche etc. entfallen.

Durch den über den Gehäuseansatz 26 gestülpten Topf 23 werden evtl. austretende Abgase so abgelenkt, daß sie nicht mit der Membrane 14 in Berührung treten können. Darüber hinaus ist die Membrane 14 durch den Topf 23 und das Formblechstück 16 gegen Strahlungswärme geschützt.

Das nach dem erfinderischen Verfahren justierte Abgasrückführventil ist aus wenigen Einzelteilen gebildet, wobei diese werkstoffsparend und mit geringster Verformungsarbeit hergestellt werden können.

## Patentansprüche

1. Verfahren zur Justierung der Federlänge eines Abgasrückführventils für eine Brennkraftmaschine, bei dem das Abgasrückführventil aus einem Gehäuse (1) mit einem Einlaß-, Ventilsitz- und Auslaßbereich aufweisenden Abgaskanal (2) besteht und einen mit dem Ventilsitz (4) zusammenwirkenden Ventilteller (5) umfaßt, der einen aus dem Gehäuse (1) herausragenden und mit einer Membrane (14) verbundenen Stößel (7) aufweist, und bei dem eine Membrandose (15) vorgesehen ist, deren Innenraum von der Membrane (14) geteilt ist und einerseits eine gehäuseseitige Kammer (25) und andererseits eine evakuierbare Kammer (18) mit einer die Membrane (14) und den Ventilteller (5) gegen den Ventilsitz (4) belastenden Feder (22) aufweist, und die evakuierbare Kammer (18) von einem einstückigen Deckel (19) begrenzt ist, der einen membranseitigen, annähernd zylindrischen Absatz sowie einen Domansatz (21) aufweist, dessen Durchmesser kleiner ist als der Durchmesser des membranseitigen Absatzes und der mit diesem über ein vom Domansatz (21) nach außen verlaufendes Zwischenteil des Deckels (19) verbunden ist, wobei die Feder (22) im Domansatz aufliegt und der Deckel (19) durch die Feder nicht verformbar ist, dadurch gekennzeichnet, daß der Domansatz (21) durch axialen Belastung in Richtung auf den membranseitigen Absatz hin gedrückt wird, dadurch das Zwischenteil in diese Richtung verformt, die Gesamthöhe des Deckels (19) verkleinert und die erforderliche Federeinspannlänge einjustiert wird.

## Claims

1. Method for adjusting the preloaded length of the spring of an exhaust gas recirculation valve for an internal combustion engine, in which the exhaust gas recirculation valve consists of a housing (1) with an exhaust gas duct (2) having an inlet region, valve seat region and outlet region and comprises a valve head (5), interacting with the valve seat (4), which valve head (5) has a stem (7) protruding from the housing (1) and connected to a diaphragm (14), and in which a diaphragm capsule (15) is provided whose inner space is divided by the diaphragm (14) and has, on the one hand, a housing-end chamber (25) and, on the other hand, a chamber (18), which can be evacuated, with a spring (22) loading the diaphragm (14) and the valve head (5) towards the valve seat (4), and the chamber (18) which can be evacuated is bounded by a single-piece cover (19), which has a diaphragm-end, approximately cylindrical step and a dome projection (21), whose diameter is smaller than the diameter of the diaphragm-end step and which is connected to the latter by means of an intermediate part of the cover (19) extending outwards from the dome projection (21), the spring (22) resting in the dome projection and it being impossible for the cover (19) to be deformed by the spring, characterised in that the dome projection (21) is pressed by axial load in the direction of the diaphragm-end step so that the intermediate part is deformed in this direction, the total height of the cover (19) is decreased and the necessary adjustment of the clamped length of the spring takes place.

## Revendications

1. Méthode pour ajuster la longueur du ressort d'une soupape de recirculation de gaz d'échappement pour un moteur à combustion interne selon laquelle la soupape de recirculation de gaz d'échappement comprend une cage (1) avec un canal d'échappement des gaz (2) présentant une zone d'admission, une zone de siège de soupape et une zone d'échappement, et une tête de soupape (5) qui coopère avec le siège de soupape (4) et comporte un poussoir (7) lequel dépasse de la cage (1) et est rattaché à une membrane (14), et pour laquelle est prévue une boîte à membrane (15) dont le volume intérieur est divisé par la membrane (14) et comprend d'une part une chambre (25) côté cage et d'autre part une chambre (18) qui peut être évacuée et est pourvue d'un ressort (22) lequel pousse la membrane (14) et la tête de soupape (5) contre le siège de soupape (4), la chambre (18) dans laquelle peut être réalisé le vide étant délimitée par un couvercle (19) d'un seul tenant qui présente, du côté membrane, une section sensiblement cylindrique ainsi qu'une embase de dôme (21) dont le diamètre est inférieur au diamètre de la section côté membrane, et qui est raccordé à cette dernière par l'intermédiaire d'une section intermédiaire du couvercle (19) laquelle s'étend à partir de l'embase de dôme (21) vers l'extérieur, le ressort (22) étant appliqué contre l'embase de dôme et le couvercle (19) n'étant pas déformable par le ressort, **caractérisée en ce** que l'embase de dôme (21) est poussée par une charge axiale en direction de la section côté membrane, ce qui provoque la déformation de la section intermédiaire dans cette direction, la diminution de la hauteur totale du couvercle (19) et l'ajustage de la longueur de fixation nécessaire du ressort.
